Europäisches Patentamt

(19) European Patent Office (11) Publication number: **0 055 962**
Office européen des brevets **B1**

(12) **EUROPEAN PATENT SPECIFICATION**

(45) Date of publication of patent specification: **20.03.85** (51) Int. Cl.⁴: **B 01 D 53/04, C 01 B 21/04**

(21) Application number: **81402070.7**

(22) Date of filing: **23.12.81**

(54) Repressurisation for pressure swing adsorption system.

(30) Priority: **29.12.80 US 221082**

(43) Date of publication of application:
**14.07.82 Bulletin 82/28**

(45) Publication of the grant of the patent:
**20.03.85 Bulletin 85/12**

(84) Designated Contracting States:
**AT BE CH DE FR GB IT LI LU NL SE**

(56) References cited:
**FR-A-2 392 707**
**GB-A-1 551 732**

(73) Proprietor: **CALGON CORPORATION**
**Route 60-Campbell's Run Road**
**Robinson Township Pennsylvania 15205 (US)**

(72) Inventor: **Vo, Toan P.**
**333 Oakville Drive Apt. 2A**
**Pittsburgh Pennsylvania 15220 (US)**

(74) Representative: **Corre, Jacques Denis Paul et al**
**Cabinet Regimbeau 26, Avenue Kléber**
**F-75116 Paris (FR)**

Courier Press, Leamington Spa, England.

EP 0 055 962 B1

## Description

### Background of the invention

This invention relates to a method for obtaining in large volume a gas stream that is enriched from 90%—99% and higher by volume in one component of a binary gas mixture. This invention especially relates to an adsorption process for providing an enriched gas stream by means of a pressure swing adsorption system using carbon molecular sieves. More particularly, this invention relates to a method for providing an inexpensive and high volume source of gases such as nitrogen, hydrogen or methane, requiring less energy to operate than either cryogenic or other pressure swing adsorption systems, and yet supplying gases of comparable quality.

The term binary gas mixture, as used herein, refers to air and other gas mixtures primarily comprised of two components of different molecular size. The term enriched gas refers to a gas comprised of that component of the binary gas mixture relatively unadsorbed after passage of the binary gas mixture through an adsorbent.

The use of pressure swing adsorption for the fractionation, or separation, of a gaseous mixture involves passing the mixture at an elevated pressure through a bed of adsorbent which is selective in its capacity to adsorb one or more of the components of the mixture. This selectivity is governed by the pore size distribution in the adsorbent and the total pore volume. Thus, gas molecules with a kinetic diameter less than or equal to the pore size are retained, or adsorbed, on the adsorbent while gas molecules of larger diameters pass through the bed. The adsorbent, in effect, sieves the gas according to its molecular size.

As the gas travels through the adsorbent bed, the pores are filled with gas molecules. One can envision an adsorption front, moving through the bed, akin to the liquid adsorption front moving through a solid adsorbent in a column chromatography system. After some time, an insufficient number of pores are available to retain gas molecules. This is known as the breakthrough point, that is, the point at which adsorption has ceased and the gas exiting the bed is essentially the same in composition as the gas that entered the adsorbent. Some time prior to this breakthrough point, the bed must be regenerated.

After treatment of the mixture to adsorb selected components therefrom, the flow of the gaseous mixture through the bed is interrupted and the adsorbent is regenerated for reuse by purging it of the adsorbed components either by vacuum or by passing through the bed, generally in the opposite direction of flow taken by the gaseous mixture, a purge gas stream which generally comprises a portion of the purified product at a low pressure.

Pressure swing adsorption usually includes at least two beds of adsorbent so that while one bed is being regenerated, the other is in the adsorption phase producing product gas. Thus, by cycling between the beds product gas is obtained constantly.

The recovery of oxygen enriched air utilizing an adsorption process employing siliceous or carbon containing adsorption agents and involving the use of temperature or pressure changes during adsorption and desorption is well known. Certain silicates, as for example zeolites, are effective for preferably adsorbing nitrogen from its mixtures with oxygen so that, by conducting air through a zeolite filled column, the first issuing gas is effectively enriched in oxygen content. The regeneration of zeolites however requires considerable expense in terms of energy and apparatus.

A well known process is the use of carbon molecular sieves for the production of enriched nitrogen from air. These sieves possess a pore structure with a size comparable to the kinetic diameter of oxygen. When used in a pressure swing adsorption system, these sieves selectively adsorb oxygen from a gas mixture, allowing other components to pass.

A four bed pressure swing adsorption unit has been successfully employed in the separation of hydrogen gas from its mixture with carbon dioxide, water and light aliphatic hydrocarbons.

Also well known is the fractionation of other binary gas mixtures by pressure swing adsorption. For example, carbon monoxide from its mixture with hydrogen using zeolite 13X and carbon dioxide from its mixture with fuel gas mixtures using charcoal, alumina or silica.

Binary gas mixtures of argon and oxygen or helium and methane have been separated on an adsorbent of partially oxidized carbon in a pressure swing adsorption process.

Typical problems in the present carbon molecular sieve technology include: low yield of enriched product gas, large amounts of molecular sieve required and energy inefficient regeneration methods.

### Summary of the invention

The object of this invention is to provide a method of repressurization for a two column pressure swing adsorption system which contains molecular sieve carbon as the adsorbent. This method provides a good yield of enriched gas in addition to overcoming the prior art problems regarding energy use in regeneration of the adsorbent. Thus there is provided an adsorption process for the production of an enriched gas which comprises the sequential steps of

(a) passing a binary gas mixture at a pressure in the range of 3.0 to 8.0 bars through a first adsorption bed of carbon molecular sieves to yield enriched gas, while simultaneously regenerating a second adsorption bed by vacuum;

(b) prior to the breakthrough venting said first bed through its inlet end, thereby releasing a first vented gas while maintaining an elevated pressure in said first bed;

(c) further venting said first bed through its outlet end, thereby releasing a second vented gas;

(d) admitting said second vented gas into the inlet end of the first mentioned second adsorption bed of carbon molecular sieves until the pressure in said first adsorption bed is equal to the pressure in said second adsorption bed;

(e) further venting said first adsorption bed through its inlet end, thereby reducing the pressure in said first bed to atmospheric pressure and simultaneously pressurizing said second adsorption bed in the range of 3.0 to 8.0 bars by introducing enriched gas into the outlet end of said second bed;

(f) regenerating said first bed by the use of vacuum, applied to the inlet end of said bed, in the range of 0.09331 to 0.1333 bar while simultaneously passing a binary gas mixture at a pressure in the range of 3.0 to 8.0 bars through the first mentioned second adsorption bed of carbon molecular sieves to yield enriched gas;

(g) prior to the breakthrough venting said second bed through its inlet end, thereby releasing a first vented gas while maintaining an elevated pressure in said second bed;

(h) further venting said second bed through its outlet end, thereby releasing a second vented gas;

(i) admitting said second vented gas into the inlet end of the first mentioned first adsorption bed of carbon molecular sieves until the pressure in said second adsorption bed is equal to the pressure in said first adsorption bed;

(j) further venting said second adsorption bed through its inlet end, thereby reducing the pressure in said second bed to atmospheric pressure and simultaneously pressurizing said first adsorption bed in the range of 3.0 to 8.0 bars by introducing enriched gas into the product outlet end of said first bed;

(k) then repeating the sequence.

Brief description of the drawing

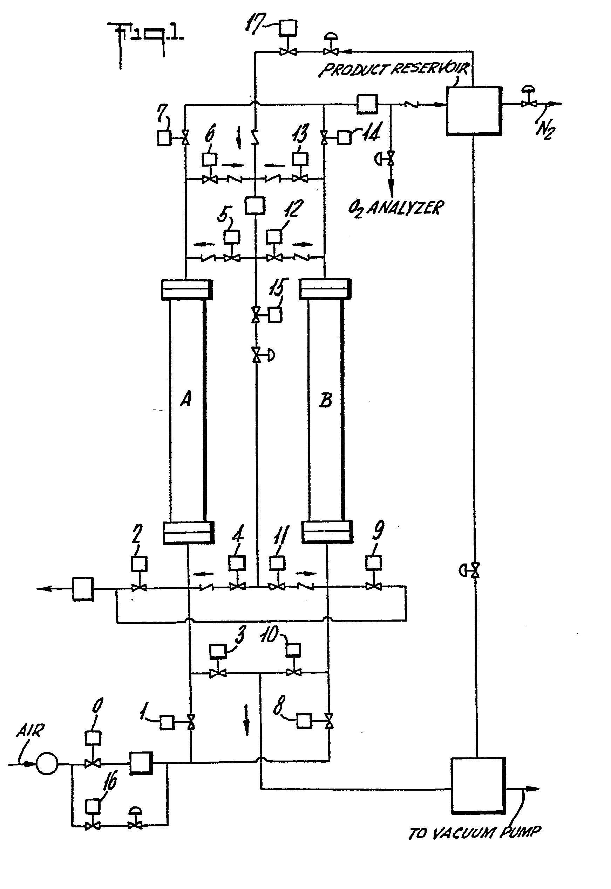

Figure 1 is a schematic flowsheet of an apparatus for practicing the method of repressurization described herein.

Detailed description

The method for employing the repressurization technique of this invention can be better understood by reference to the accompanying drawing which shows a two column pressure swing adsorption unit for the fractionation of a binary gas mixture in accordance with this invention. Although the present invention is described and illustrated in connection with a preferred embodiment, it is to be understood that modifications and variations may be used without departing from the spirit of the invention. For example, any binary gas mixture including, but not limited to, air (nitrogen and oxygen), methane and carbon dioxide or hydrogen and carbon monoxide, will suffice.

Referring to the drawing in detail, there is shown two pressure resistant columns A and B, each of which is filled with an adsorption bed of carbon molecular sieves suitable for the fractionation of air into nitrogen and oxygen.

The series of valves connecting the pressure resistant columns A and B may be defined by the number shown in the drawing and by the function performed in this one preferred arrangement:

(a) Valves 0 & 16—main air flow valves.
(b) Valves 1 & 8—inlet air valves to columns A & B respectively.
(c) Valves 3 & 10—regeneration valves (connected to the vacuum pump)-for columns A & B.
(d) Valves 2 & 9—purge valves—release column pressure for columns A & B.
(e) Valves 7 & 14—product flow valves—from columns A & B.
(f) Valves 5, 12 & 17—backfilling valves—product quality gas introduced into outlet end of columns A & B after pressure equilization and before adsorption.
(g) Valves 4, 6 11, 13 & 15—pressure equilibration between outlet of one column and inlet of other column.

While columns A and B are shown in the vertical position, they may be installed in either the horizontal or vertical position without adverse effect to the mode of operation.

Ambient air is dried and compressed and introduced into the system via either valve 0 or valve 16. When compressed air is fed via valve 0, its mass flow rate is controlled by a mass flow controller at a pressure equal to that of the carbon bed. When air is fed via valve 16, its mass flow rate is not regulated; however, its pressure at the outlet of this valve is essentially the same as that upstream.

The ambient air may be modified, prior to adsorption, by passing it through a condenser to remove excess humidity as a relative humidity of less than 40% is preferred. Also, a filter or scrubber may be employed to remove other gases such as carbon dioxide, sulfur dioxide or oxides of nitrogen. These steps improve the purity of the exiting gas stream and are employed when the specification for 100% pure nitrogen mandates such prior removal. They are however auxiliary and not requisite to the successful operation of this invention.

Feed air is admitted to either column A or column B at an adsorption pressure of, for example, 3.0—8.0 bars, via valve 0 and either valve 1 or valve 8 to selectively sieve oxygen and the feed air is pushed upward through the carbon sieve bed. Nitrogen gas is discharged from column A or column B via either valve 7 or valve 14 respectively. The instantaneous nitrogen flow rate is measured by a mass flow meter and the nitrogen gas oxygen content is analyzed upstream from the product reservoir. A flow of nitrogen gas is discharged from the product reservoir to keep its pressure constant.

When one carbon bed is generating product gas, the other bed is being regenerated by vacuum applied via valves 3 or 10. Thus, while column A is producing nitrogen via open valves 0, 1 and 7, column B is being regenerated by a vacuum in the range of 0.09331 to 0.1333 bar via open valve 10.

When the nitrogen gas oxygen content has reached a predetermined level, for example greater than 2%, valves 1 and 7 are closed for column A or valves 8 and 14 are closed for column B. Valves 2 or 9 are then opened for a short time, for example, less than 5 seconds, thus venting the column releasing a first vented gas so that the adsorption front in the column moves toward the inlet end of the column. Subsequently, valves 6, 15 and 11 or valves 13, 15 and 4 are opened thereby venting one column releasing a second vented gas, and the pressures in the two columns are allowed to equalize. Then nitrogen gas from the product reservoir is admitted into column B via valves 17 and 12 or into column A via valves 17 and 5 to repressurize it to the adsorption pressure before its adsorption step, for example, 3.0—8.0 bars. At the same time, depending on the pressure in the columns at the end of the pressure equalization step, valve 2 or 9 is opened to further vent the column to atmospheric pressure before valve 3 or 10 is opened so that the carbon in the column is regenerated by vacuum. Feed air is now introduced into column B or column A via valve 0 and either valve 8 or 1 at an adsorption pressure of, for example, 3.0—8.0 bars. Thus the cycle is repeated using one column for the production of nitrogen while the other column is regenerated by vacuum.

**Claims**

1. An adsorption process for producing an enriched gas which comprises the sequential Steps of:

(a) passing a binary gas mixture at a pressure in the range of 3.0 to 8.0 bars through a first adsorption bed of carbon molecular sieves to yield enriched gas, while simultaneously regenerating a second adsorption bed by vacuum;

(b) prior to the breakthrough venting said first bed through its inlet end, thereby releasing a first vented gas while maintaining an elevated pressure in said first bed;

(c) further venting said first bed through its outlet end, thereby releasing a second vented gas;

(d) admitting said second vented gas into the inlet end of the first mentioned second adsorption bed of carbon molecular sieves until the pressure in said first adsorption bed is equal to the pressure in said second adsorption bed;

(e) further venting said first adsorption bed through its inlet end, thereby reducing the pressure in said first bed to atmospheric pressure and simultaneously pressurizing said second adsorption bed in the range of 3.0 to 8.0 bars by introducing enriched gas into the outlet end of said second bed;

(f) regenerating said first bed by the use of vacuum, applied to the inlet end of said bed, in the range of 0.09331 to 0.1333 bar, while simultaneously passing a binary gas mixture at a pressure in the range of 3.0 to 8.0 bars through the first mentioned second adsorption bed of carbon molecular sieves to yield enriched gas;

(g) prior to the breakthrough venting said second bed through its inlet end, thereby releasing a first vented gas while maintaining an elevated pressure in said second bed;

(h) further venting said second bed through its outlet end, thereby releasing a second vented gas;

(i) admitting said second vented gas into the inlet end of the first mentioned first adsorption bed of carbon molecular sieves until the pressure in said second adsorption bed is equal to the pressure in said first adsorption bed;

(j) further venting said second adsorption bed through its inlet end, thereby reducing the pressure in said second bed to atmospheric pressure and simultaneously pressurizing said first adsorption bed in the range of 3.0 to 8.0 bars by introducing enriched gas into the product outlet end of said first bed;

(k) then repeating the sequence.

2. The adsorption process of Claim 1 wherein the binary gas mixture is air and the enriched gas is nitrogen.

**Patentansprüche**

1. Ein Adsorptionsverfahren zur Herstellung eines angereicherten Gases, das die nachstehenden Stufen in Folge umfasst:

(a) Durchleiten eines binären Gasgemisches bei einem Druck in Bereich von 3,0 bis 8,0 bar durch ein erstes Adsorptionsbett aus Kohlenstoff-Molekularsieben zur Erzielung von angereichertem Gas, wobei man gleichzeitig ein zweites Adsorptionsbett durch Vakuum regeneriert;

(b) vor dem Durchschlagen Entlüften des ersten Betts durch dessen Einlassende, wobei man ein erstes entlüftetes Gas freisetzt, während man im ersten Bett einen erhöhten Druck Aufrechterhält;

(c) weiteres Entlüften des ersten Betts durch dessen Auslassende, wobei man ein zweites entlüftetes Gas freisetzt;

(d) Zuführen des zweiten entlüfteten Gases in das Einlassende des vorerwähnten zweiten Adsorptionsbetts aus Kohlenstoff-Molekularsieben, bis der Druck im ersten Adsorptionsbett gleich dem Druck im zweiten Adsorptionsbett ist;

(e) weiteres Entlüften des ersten Adsorptionsbetts durch dessen Einlassende, wodurch man den Druck im ersten Bett auf Atmosphärendruck verringert und gleichzeitig das zweite Adsorptionsbett durch Einleiten von angereichertem Gas in das Auslassende des zweiten Betts auf einen Druck im Bereich von 3,0 bis 8,0 bar bringt;

(f) Regenerieren des ersten Betts unter Anwendung von Vakuum, das am Einlassende dieses Betts angelegt wird, im Bereich von 0,0931 bis 0,1333 bar, während man gleichzeitig ein binäres Gasgemisch bei einem Druck von 3,0 bis 8,0 bar durch das vorerwähnte zweite Adsorptionsbett aus Kohlenstoff-Molekularsieben, zur Erzielung von angereichertem Gas leitet;

(g) vor dem Durchschlagen Entlüften des zweiten Betts durch dessen Einlassende, wobei man ein erstes entlüftetes Gas freisetzt, während man im zweiten Bett einen erhöhten Druck aufrechterhält;

(h) weiteres Entlüften des zweiten Betts durch dessen Auslassende, wobei man ein zweites entlüftes Gas freisetzt;

(i) Zuführen des zweiten entlüfteten Gases in das Einlassende des vorerwähnten ersten Adsorptionsbetts aus Kohlenstoff-Molekularsieben, bis der Druck im zweiten Adsorptionsbett gleich dem Druck im ersten Adsorptionsbett ist;

(j) weiteres Entlüften des zweiten Adsorptionsbetts durch dessen Einlassende, wodurch man den Druck im zweiten Bett auf Atmosphärendruck verringert und gleichzeitig das erste Adsorptionsbett durch Einleiten von angereichertem Gas in das Produktauslassende des ersten Betts auf einen Druck im Bereich von 3,0 bis 8,0 bar bringt;

(k) anschliessendes Widerholen der Sequenz.

2. Adsorptionsverfahren nach Anspruch 1, wobei das binäre Gasgemisch Luft und das angereicherte Gas Stickstoff ist.

## Revendications

1. Un procédé d'adsorption pour la production d'un gaz enrichi qui comprend les étapes séquentielles qui consistent:

a) à faire passer un mélange gazeux binaire à une pressuion comprise dans la plage de 3,0 à 8,0 bars à travers un premier lit d'adsorption formé par un tamis moléculaire au charbon pour produire du gaz enrichi tout en régénérant simultanément un second lit d'adsorption par application d'un vide;

b) avant le point de percée, à évacuer ledit premier lit par son extrémité d'entrée de façon à décharger un premier gaz d'évacuation tout en maintenant une pression élevée dans ledit premier lit;

c) à évacuer ensuite ledit premier lit par son extrémité de sortie, déchargeant ainsi un second gaz d'évacuation;

d) à admettre ledit second gaz d'évacuation dans l'extrémité d'entrée du second lit d'adsorption ci-dessus mentionné de tamis moléculaire au charbon jusqu'à ce que la pression régnant dans ledit premier lit d'adsorption soit égale à la pression régnant dans ledit second lit d'adsorption;

e) à évacuer ensuite ledit premier lit d'adsorption par son extrémité d'entrée, en réduisant de ce fait la pression qui règne dans ledit premier lit à la pression atmosphérique et à mettre simultanément sous pression ledit second lit d'adsorption dans la plage de 3,0 à 8,0 bars, en introduisant du gaz enrichi dans l'extrémité de sortie dudit second lit;

f) à régénérer ledit premier lit au moyen d'un vide appliqué à l'extrémité d'entrée dudit lit, dans la plage de 0,09331 à 0,1333 bar, tout en faisant passer simultanément un mélange gazeux binaire à une pression comprise dans la plage de 3,0 à 8,0 bars à travers le second lit d'adsorption ci-dessus mentionné de tamis moléculaire au charbon pour produire du gaz enrichi;

g) avant le point de percée, à évacuer ledit second lit par son extrémité d'entrée de façon à décharger un premier gaz d'évacuation tout en maintenant une pression élevée dans ledit second lit;

h) à évacuer ensuite ledit second lit par son extrémité de sortie, déchargeant ainsi un second gaz d'évacuation;

i) à admettre ledit second gaz d'évacuation dans l'extrémité d'entrée du premier lit d'adsorption ci-dessus mentionné de tamis moléculaire au charbon jusqu'à ce que la pression régnant dans ledit second lit d'adsorption soit égale à la pression régnant dans ledit premier lit d'adsorption;

j) à évacuer ensuite ledit second lit d'adsorption par son extrémité d'entrée, en réduisant de ce fait la pression qui règne dans ledit second lit à la pression atmosphérique et à mettre simultanément sous pression ledit premier lit d'adsorption dans la plage de 3,0 à 8,0 bars, en introduisant du gaz enrichi dans l'extrémité de sortie dudit premier lit;

k) puis à répéter la séquence.

2. Le procédé d'adsorption de la revendication 1, dans lequel le mélange gazeux binaire est de l'air et le gaz enrichi est de l'azote.